# FASCICULE DE BREVET EUROPEEN

(11) **EP 3 278 011 B1**
(45) Date de publication et mention de la délivrance du brevet: **20.07.2022**
(21) Numéro de dépôt: 16714814.7
(22) Date de dépôt: 24.03.2016
(51) Int. Cl.: F21S 41/20, F21S 43/20, F21V 3/04, B29C 45/14, B29C 33/74, B29C 45/16

(54) **GLACE POUR UN DISPOSITIF D'ECLAIRAGE ET/OU DE SIGNALISATION D'UN VEHICULE AUTOMOBILE**
LINSE FÜR EINE BELEUCHTUNGS- UND/ODER SIGNALISIERUNGSVORRICHTUNG EINES KRAFTFAHRZEUGES
LENS FOR A LIGHTING AND/OR SIGNALLING DEVICE OF A MOTOR VEHICLE

(30) Priorité: 01.04.2015 FR 1552793
(43) Date de publication de la demande: 07.02.2018
(73) Titulaire: Valeo Vision, 93012 Bobigny Cedex (FR)
(72) Inventeur: MENORET, Romain, 49000 Angers (FR); ALTERMATT, Guillaume, 49000 Angers (FR); COLOMBEL, Jean-Marc, 49430 Les Rairies (FR)
(74) Mandataire: Valeo Visibility
(86) Numéro de dépôt international: PCT/EP2016/056676
(87) Numéro de publication internationale: WO 2016/156253

(56) Documents cités:
- DE-A1-102012 015 265
- DE-U1- 29 809 618
- FR-A1- 2 272 332
- FR-A1- 2 853 952
- US-A- 2 343 598

## Description

L'invention a trait au domaine de l'éclairage et/ou de la signalisation, notamment pour véhicules automobiles. Plus particulièrement, l'invention a trait à la conception et à la réalisation d'une glace venant en fermeture d'un boîtier d'un dispositif d'éclairage et/ou de signalisation d'un véhicule automobile.

Ces glaces sont essentiellement transparentes, pour laisser passer les rayons lumineux émis par les éléments optiques logés dans le boîtier vers l'extérieur du véhicule. Classiquement, l'élément transparent est couvert partiellement, notamment à sa périphérie ou tout au moins sur un bord, par un élément opaque, qui permet d'assurer notamment une continuité esthétique entre l'élément transparent de la glace et l'élément de carrosserie dans lequel est logé le dispositif d'éclairage. L'élément transparent à la lumière et l'élément opaque sont formés chacun par une couche de matière plastique obtenue par une opération de moulage. On connait des procédés dans lequel on moule dans un premier temps l'élément opaque puis dans un deuxième temps l'élément transparent en surmoulage de l'élément opaque. Le moule et le contre-moule utilisés pour la première opération de moulage sont réutilisés, éloignés l'un de l'autre, pour définir la cavité dans laquelle est injectée la matière pour l'élément transparent. Ce mode opératoire, s'il permet la réalisation de glaces à forte cadence et à coût faible, fait apparaître deux types d'inconvénients. L'usure des parties de moule en acier lorsqu'ils sont plaqués l'un contre l'autre pour la bonne étanchéité du moule lors de l'injection de matière dans la première opération de moulage génère une rugosité aléatoire pour des surfaces aptes à définir la zone d'injection de matière dans la deuxième opération de surmoulage, de sorte qu'une zone de l'élément transparent, à proximité de l'élément opaque, peut présenter un état de surface nécessitant une retouche par polissage plus importante que prévue. Cette retouche est d'autant plus pénalisante que la localisation de cette surface à reprendre n'est pas constante d'une pièce à l'autre. Notamment, l'usure des moules évolue au fur et à mesure des cycles. Egalement, on constate lors de l'opération de surmoulage et de l'arrivée de matière plastique à haute température, une déformation de l'élément opaque en place dans le moule, et notamment par entraînement de matière de l'arête de contact portée par le bord d'extrémité de l'élément opaque venant en surplomb de l'élément transparent.

La présente invention vise à proposer une glace répondant à ces inconvénients, qui soit obtenue par un procédé particulièrement simple à mettre en place, qui ne nécessite pas des opérations de reprise coûteuses en temps, et qui s'inscrive dans une démarche esthétique générale du projecteur.

Le document FR 2 853 952 A1 illustre les connaissances de l'homme du métier.

L'invention a ainsi pour objet une glace pour un dispositif d'éclairage et/ou de signalisation d'un véhicule automobile, comportant une première couche de matière sur une première face de laquelle est disposée en surépaisseur une deuxième couche de matière, ladite deuxième couche s'étendant partiellement sur la première couche de sorte qu'elle présente un bord surplombant une partie dégagée de la première couche de matière, non recouverte par la deuxième couche de matière. Selon l'invention, la partie dégagée de la première couche de matière comporte sur ladite première face une encoche qui s'étend le long dudit bord de la deuxième couche de matière, l'encoche présente une surface inclinée, par exemple un plan incliné, présentant une extrémité proximale partant de l'arête de contact de la première couche de matière avec le bord d'extrémité de la deuxième couche de matière pour s'enfoncer dans l'épaisseur de la première couche de matière, et une extrémité distale prolongée par une paroi de butée, la paroi de butée s'étendant perpendiculairement à la première face de la première couche de matière.

Selon différentes caractéristiques de l'invention, prises seules ou en combinaison, on peut prévoir que :
- la première couche est réalisée dans une matière plastique transparente à la lumière, tandis que la deuxième couche est réalisée dans une matière plastique plus opaque que ladite première couche ;
- la deuxième couche s'étend à la périphérie de la première couche ; notamment la deuxième couche peut s'étendre à la périphérie de la première couche, sur tout ou partie du contour de cette dernière.
- l'encoche présente une surface inclinée, et par exemple un plan incliné, partant sensiblement de l'arête de contact de la première couche avec le bord de la deuxième couche pour s'enfoncer dans l'épaisseur de la première couche ; et cette encoche présente une paroi de butée qui s'étend de préférence sensiblement perpendiculairement à la première face de la première couche, en prolongeant le cas échéant la surface inclinée ; ladite paroi de butée peut s'étendre environ à 2.5 mm de l'arête de contact de la première couche avec le bord de la deuxième couche, et la profondeur de l'encoche peut être environ de 0.2 mm ;
- l'arête de contact de la première couche avec le bord de la deuxième couche s'étend sensiblement dans le même plan que la partie dégagée de la première couche ;
- les deux couches de matière consistent en des couches plastique moulées, la première couche de plastique étant surmoulée sur la deuxième couche de matière plastique ;

L'invention concerne également un dispositif d'éclairage et/ou de signalisation comportant un boîtier apte à loger des équipements optiques et fermé par une glace tel qu'il vient d'être présenté.

Dans un tel dispositif, on peut prévoir avantageusement que :
- la glace est orientée de sorte que la première face de la première couche portant l'encoche est tournée vers l'intérieur du boîtier ;
- la glace est fixée sur le boîtier au niveau de la deuxième couche de matière.

D'autres caractéristiques et avantages de la présente invention apparaitront plus clairement à l'aide de la description et des dessins parmi lesquels :
- la figure 1 est une vue de face d'un dispositif d'éclairage et/ou de signalisation, dans laquelle n'est visible que la glace disposée devant un boîtier du dispositif, ladite glace présentant une partie centrale transparente à la lumière et une partie périphérique opaque ;
- la figure 2 est une vue en coupe de la glace selon l'axe II-II illustré sur la figure 1 ;
- la figure 3 est une vue en perspective de la coupe de la glace illustrée sur la figure 2 ;

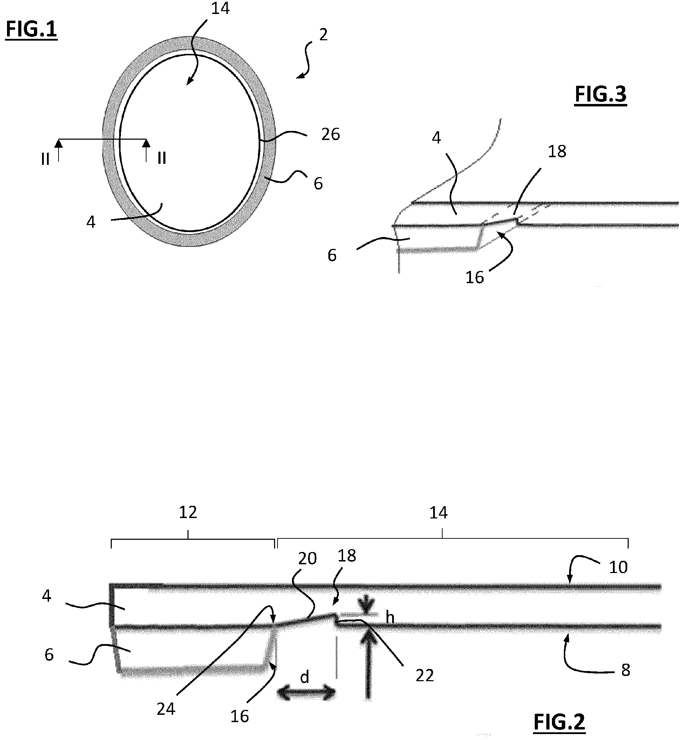

On va tout d'abord décrire la glace 2 selon l'invention, illustrée sur les figures 1 à 3. Cette glace vient en recouvrement d'un boîtier d'un dispositif d'éclairage et/ou de signalisation dans lequel on loge des équipements optiques parmi lesquels au moins une source de lumière, le boîtier et les équipements optiques étant ici non visibles.

Sur la figure 1, la vue de face de la glace 2 rend visible la présence d'une première couche 4 en matière transparente et d'une deuxième couche 6 en matière opaque. On comprend que par matière opaque, on veut dire que la deuxième couche de matière se révèle être moins transparente à la lumière que la première couche de matière. La glace présente ici une forme circulaire, voire sensiblement ellipsoïdale. On comprendra que les contours de la glace peuvent être autres, pour s'adapter à la forme du dispositif de signalisation et aux éléments optiques logés dans le boîtier fermé par la glace, et à la forme de l'élément de carrosserie dans lequel le dispositif est monté.

La deuxième couche 6 est disposée sur la périphérie de la première couche 4, sur une largeur déterminée à la fois par des contraintes esthétiques - il convient de s'assurer que l'effet visuel de continuité entre la carrosserie et la partie centrale transparente du feu est bon - et par des contraintes de réglementation d'éclairage - il convient de s'assurer que la partie transparente à la lumière est suffisamment grande pour réaliser les fonctions d'éclairage nécessaires.

Sur les figures 2 et 3, on peut observer que la deuxième couche 6 est disposée en surépaisseur de la première couche 4. La première couche prend la forme d'une plaque de matériau plastique transparent, de type PMMA, et cette plaque présente une première face 8 et une deuxième face 10 opposées l'une à l'autre. La première face 8 est tournée vers l'intérieur du véhicule, et la deuxième face 10 est tournée vers l'extérieur du boîtier.

C'est la première face 8 de la première couche 4 qui porte la deuxième couche 6, disposée vers l'intérieur du véhicule par rapport à la première couche. On peut distinguer sur la première couche 4, une partie recouverte 12 par la deuxième couche et une partie dégagée 14, non recouverte par la deuxième couche et à travers laquelle sont aptes à sortir les rayons lumineux émis par le dispositif de signalisation et/ou d'éclairage.

La deuxième couche 6 s'étend donc en saillie de la première couche 4 et elle présente un bord d'extrémité 16 surplombant la première couche, ce bord d'extrémité 16 étant sensiblement perpendiculaire à la première face 8 de la première couche 4.

On comprend que dans le mode de réalisation illustré, la partie dégagée 14 est ici une partie centrale, entourée par la partie recouverte 12, mais que dans d'autres modes de réalisation, ces deux parties de la première couche pourraient être les deux moitiés d'un ensemble sensiblement rectangulaire par exemple.

La première face 8 de la première couche 4 s'étend sur un même plan, aussi bien pour la partie recouverte que pour la partie dégagée, à l'exception d'une encoche 18 formée dans l'épaisseur de la première couche depuis la première face.

L'encoche 18 est réalisée tout au long de la deuxième couche 6, au voisinage direct du bord d'extrémité 16 de celle-ci. L'encoche est formée dans l'épaisseur de la première couche par une surface inclinée 20 et une paroi de butée 22, la surface inclinée 20 étant adapté à s'enfoncer dans l'épaisseur de la première couche, et la paroi de butée 22 formant un renvoi vers la première face de la première couche.

La surface inclinée 20 présente une extrémité proximale sensiblement au voisinage de l'arête de contact 24 de la première couche 4 avec le bord d'extrémité 16 de la deuxième couche 6, et la paroi de butée 22 prolonge l'extrémité distale de la surface inclinée 20 pour s'étendre sensiblement perpendiculaire à la première face 8 de la première couche 4.

Pour une section donnée, telle qu'elle peut être illustrée sur la figure 2, la deuxième couche 8 s'étend en saillie de la première couche 4 pour dépasser de celle-ci selon une première direction D1, le bord d'extrémité16 de la deuxième couche 8 s'étendant sensiblement dans cette première direction. Et l'encoche 18 est creusée dans l'épaisseur de la première couche 4 sensiblement selon la première direction D1, dans le sens opposé. Pour cette même section donnée, l'encoche 18 s'étend en éloignement du bord d'extrémité 16 de la deuxième couche 8, selon une deuxième direction D2.

De l'extérieur, tel que cela est visible sur la figure 1, un observateur voit une partie centrale dégagée 14, transparente à la lumière, une partie périphérique plus sombre 12, ainsi qu'une bande 26 qui s'étend le long de la partie périphérique, à une distance constante, la bande 26 étant ici annulaire. L'observateur a ainsi l'impression d'un design contrôlé, avec une bande s'étendant de façon continue à une distance constante de la partie la plus sombre. L'observateur, situé en face du dispositif, ne perçoit qu'une bande du fait de l'orientation de la paroi de butée 22, sensiblement perpendiculaire à la première face 8 de la première couche 4, et donc sensiblement parallèle à l'axe optique.

Les dimensions de l'encoche 18 sont petites par rapport aux dimensions des deux couches formant la glace 2. On comprendra que la largeur de l'encoche, telle qu'elle est rendue visible par la présence sur la figure 1 de la bande 26, a été exagérée pour améliorer la lecture de la figure. A titre d'exemple, on pourra prévoir que la largeur de l'encoche 18, c'est-à-dire sensiblement la distance de la paroi de butée 22 par rapport au bord d'extrémité 16 de la deuxième couche 6, est comprise entre 2 mm et 3 mm, et notamment qu'elle est sensiblement égale à 2.5 mm. L'inclinaison de la pente et la largeur telle qu'elle vient d'être définie assurent avantageusement une profondeur d'encoche, c'est-à-dire sensiblement la hauteur de la paroi de butée par rapport à la première face, comprise entre 0.1 mm et 0.3 mm, et notamment sensiblement égale à 0.2 mm.

Les deux couches de matière 4, 6 consistent en des couches de matière plastique moulées, la première couche de plastique 4, transparente à la lumière pour la réalisation de la fonction d'éclairage étant surmoulée sur la deuxième couche de matière plastique 6, plus sombre pour la réalisation de la fonction esthétique.

La description qui précède explique clairement comment l'invention permet d'atteindre les objectifs qu'elle s'est fixés et notamment de proposer un dispositif d'éclairage et/ou de signalisation, réalisable par moulage et surmoulage successifs de deux couches de matière plastique dont l'une est en surépaisseur de l'autre seulement sur une partie, qui présente une esthétique pour l'observateur extérieur qui soit reproductible pour chaque véhicule porteur de ce dispositif. Dans ce contexte, la mise en place d'une encoche, sur une face de la couche de matière porteuse de l'autre couche, permet d'assurer une marque à distance constante d'un véhicule à l'autre, tout en concentrant les zones de dégradation au niveau de cette encoche ce qui facilite les opérations de reprise des dispositifs avant leur installation sur la véhicule, et tout en permettant également de maîtriser l'injection de matière dans les opération de moulage pour limiter les déformations de matière dans le moule.

Bien entendu, diverses modifications peuvent être apportées par l'homme du métier aux structures du dispositif, qui viennent d'être décrites à titre d'exemples non limitatifs, dès lors que le dispositif d'éclairage et/ou de signalisation présente une encoche jouant les rôles évoqués dans la présente description. A titre d'exemple, la forme et la disposition respective des couches de matière pourraient être modifiées, dès lors que l'encoche reste disposée en regard de la couche de matière en surépaisseur. Les couches de matière pourraient également, sans sortir du contexte de l'invention, être surmoulées l'une par rapport à l'autre avec l'une portant l'encoche, sans toutefois que ces couches soient l'une claire et l'autre opaque.

## Revendications

1. Glace (2) pour un dispositif d'éclairage et/ou de signalisation d'un véhicule automobile, comportant une première couche de matière (4) sur une première face (8) de laquelle est disposée en surépaisseur une deuxième couche de matière (6), ladite deuxième couche (6) s'étendant partiellement sur la première couche (4) de sorte qu'elle présente un bord d'extrémité (16) surplombant une partie dégagée (14) de la première couche de matière (4),
la partie dégagée (14) de la première couche de matière (4), non recouverte par la deuxième couche de matière (6), comportant sur ladite première face (8) une encoche (18) qui s'étend le long dudit bord d'extrémité (16) de la deuxième couche de matière (6),
**caractérisée en ce que** l'encoche (18) présente une surface inclinée (20), par exemple un plan incliné, présentant une extrémité proximale partant de l'arête de contact (24) de la première couche de matière (4) avec le bord d'extrémité (16) de la deuxième couche de matière (6) pour s'enfoncer dans l'épaisseur de la première couche de matière (4), et une extrémité distale prolongée par une paroi de butée (22), la paroi de butée (22) s'étendant perpendiculairement à la première face (8) de la première couche de matière (4).

2. Glace (2) selon la revendication 1, **caractérisée en ce que** la première couche de matière (4) est réalisée dans une matière plastique transparente à la lumière, et **en ce que** la deuxième couche de matière (6) est réalisée dans une matière plastique plus opaque que ladite première couche de matière (4).

3. Glace (2) selon l'une des revendications 1 ou 2, **caractérisée en ce que** la deuxième couche de matière (6) s'étend à la périphérie de la première couche de matière (4).

4. Glace (2) selon la revendication précédente, **caractérisée en ce que** ladite paroi de butée (22) s'étend environ à une distance comprise entre 2 et 3 mm de l'arête de contact (24) de la première couche de matière (4) avec le bord d'extrémité (16) de la deuxième couche (6) et notamment à une distance de 2.5 mm.

5. Glace (2) selon l'une des revendications précédentes, **caractérisée en ce que** la profondeur de l'encoche (18) est comprise entre 0.1 mm et 0.3 mm, et notamment égale à 0.2 mm.

6. Glace (2) selon l'une des revendications précédentes, **caractérisée en ce que** les deux couches de matière (4, 6) consistent en des couches plastique moulées, la première couche de matière (4) plastique étant surmoulée sur la deuxième couche de matière (6) plastique.

7. Dispositif d'éclairage et/ou de signalisation comportant un boîtier apte à loger des équipements optiques et fermé par une glace (2) selon l'une des revendications précédentes.

8. Dispositif selon la revendication précédente, **caractérisé en ce que** la glace (2) est orientée de sorte que la première face (8) de la première couche de matière (4) portant l'encoche (18) est tournée vers l'intérieur du boîtier.

9. Dispositif selon l'une des revendications 7 ou 8, **caractérisé en ce que** la glace (2) est fixée sur le boîtier au niveau de la deuxième couche de matière (6).

## Patentansprüche

1. Streuscheibe (2) für eine Beleuchtungs- und/oder Signalisierungsvorrichtung eines Kraftfahrzeugs, welche eine erste Materialschicht (4) umfasst, bei der auf einer ersten Seite (8) als Verdickung eine zweite Materialschicht (6) angeordnet ist, wobei sich die zweite Schicht (6) teilweise auf der ersten Schicht (4) erstreckt, derart, dass sie einen Endrand (16) aufweist, der einen freiliegenden Teil (14) der ersten Materialschicht (4) überragt,
wobei der freiliegende Teil (14) der ersten Materialschicht (4), der nicht von der zweiten Materialschicht (6) bedeckt wird, auf der ersten Seite (8) einen Einschnitt (18) umfasst, welcher sich entlang des Endrandes (16) der zweiten Materialschicht (6) erstreckt,
**dadurch gekennzeichnet, dass** der Einschnitt (18) eine geneigte Fläche (20) aufweist, zum Beispiel eine geneigte Ebene, die ein proximales Ende aufweist, das von der Kontaktkante (24) der ersten Materialschicht (4) mit dem Endrand (16) der zweiten Materialschicht (6) ausgeht, um sich in die Dicke der ersten Materialschicht (4) hinein abzusenken, und ein distales Ende, das von einer Anschlagwand (22) verlängert wird, wobei sich die Anschlagwand (22) senkrecht zur ersten Seite (8) der ersten Materialschicht (4) erstreckt.

2. Streuscheibe (2) nach Anspruch 1, **dadurch gekennzeichnet, dass** die erste Materialschicht (4) aus einem lichtdurchlässigen Kunststoffmaterial hergestellt ist, und dadurch, dass die zweite Materialschicht (6) aus einem lichtundurchlässigeren Kunststoffmaterial als die erste Materialschicht (4) hergestellt ist.

3. Streuscheibe (2) nach einem der Ansprüche 1 oder 2, **dadurch gekennzeichnet, dass** sich die zweite Materialschicht (6) am Umfang der ersten Materialschicht (4) erstreckt.

4. Streuscheibe (2) nach dem vorhergehenden Anspruch, **dadurch gekennzeichnet, dass** sich die Anschlagwand (22) ungefähr in einem Abstand von der Kontaktkante (24) der ersten Materialschicht (4) mit dem Endrand (16) der zweiten Schicht (6) erstreckt, der zwischen 2 und 3 mm beträgt, und insbesondere in einem Abstand von 2,5 mm.

5. Streuscheibe (2) nach einem der vorhergehenden Ansprüche, **dadurch gekennzeichnet, dass** die Tiefe des Einschnitts (18) zwischen 0,1 mm und 0,3 mm liegt und insbesondere 0,2 mm beträgt.

6. Streuscheibe (2) nach einem der vorhergehenden Ansprüche, **dadurch gekennzeichnet, dass** die zwei Materialschichten (4, 6) aus geformten Kunststoffschichten bestehen, wobei die erste Kunststoffmaterialschicht (4) auf die zweite Kunststoffmaterialschicht (6) aufgeformt ist.

7. Beleuchtungs- und/oder Signalisierungsvorrichtung, welche ein Gehäuse umfasst, das geeignet ist, optische Einrichtungen aufzunehmen, und von einer Streuscheibe (2) nach einem der vorhergehenden Ansprüche verschlossen wird.

8. Vorrichtung nach dem vorhergehenden Anspruch, **dadurch gekennzeichnet, dass** die Streuscheibe (2) so ausgerichtet ist, dass die erste Seite (8) der ersten Materialschicht (4), die den Einschnitt (18) trägt, dem Inneren des Gehäuses zugewandt ist.

9. Vorrichtung nach einem der Ansprüche 7 oder 8, **dadurch gekennzeichnet, dass** die Streuscheibe (2) an der zweiten Materialschicht (6) am Gehäuse befestigt ist.

## Claims

1. A lens (2) for a lighting and/or signaling device of a motor vehicle including a first layer of material (4), arranged on a first face (8) of which is a second layer of material (6) with additional thickness, said second layer (6) extending partially over the first layer (4) so as to have one end edge (16) overhanging an exposed portion (14) of the first layer of material (4),
the exposed portion (14) of the first layer of material (4), which is not covered by the second layer of material (6), including on said first face (8) a notch (18) which extends along said end edge (16) of the second layer of material (6),
**characterized in that** the notch (18) has an inclined surface (20), for example an inclined plane, having a proximal extremity starting from the contact edge (24) of the first layer of material (4) with the end edge (16) of the second layer of material (6), enabling it to be embedded in the thickness of the first layer of material (4), and a distal extremity prolonged by an abutment wall (22), the abutment wall (22) extending perpendicular to the first face (8) of the first layer of material (4).

2. The lens (2) as claimed in claim 1, **characterized in that** the first layer of material (4) is produced from a plastic material which is transparent to light, and **in that** the second layer of material (6) is produced from a plastic material that is more opaque than said first layer of material (4).

3. The lens (2) as claimed in one of claims 1 or 2, **characterized in that** the second layer of material (6) extends to the periphery of the first layer of material (4).

4. The lens (2) as claimed in the preceding claim, **characterized in that** said abutment wall (22) extends approximately to a distance of between 2 and 3 mm from the contact edge (24) of the first layer of material (4) with the end edge (16) of the second layer (6) and in particular to a distance of 2.5 mm.

5. The lens (2) as claimed in one of the preceding claims, **characterized in that** the depth of the notch (18) is between 0.1 mm and 0.3 mm, and in particular is equal to 0.2 mm.

6. The lens (2) as claimed in one of the preceding claims, **characterized in that** the two layers of material (4, 6) consist of molded plastic layers, the first layer of plastic material (4) being overmolded on the second layer of plastic material (6).

7. A lighting and/or signaling device including a housing adapted to accommodate optical equipment and closed by a lens (2), as claimed in one of the preceding claims.

8. The device as claimed in the preceding claim, **characterized in that** the lens (2) is oriented so that the first face (8) of the first layer of material (4) bearing the notch (18) is turned towards the interior of the housing.

9. The device as claimed in one of claims 7 or 8, **characterized in that** the lens (2) is fixed to the housing at the level of the second layer of material (6).
